**Europäisches Patentamt**

**European Patent Office**

**Office européen des brevets**

(11) Veröffentlichungsnummer: **0 297 152**
**B1**

(12) **EUROPÄISCHE PATENTSCHRIFT**

(45) Veröffentlichungstag der Patentschrift:
21.03.90

(51) Int. Cl.⁴: **B60N 3/00**

(21) Anmeldenummer: 87109394.4

(22) Anmeldetag: 30.06.87

(54) Klapptisch.

(43) Veröffentlichungstag der Anmeldung:
04.01.89 Patentblatt 89/1

(45) Bekanntmachung des Hinweises auf die Patenterteilung:
21.03.90 Patentblatt 90/12

(84) Benannte Vertragsstaaten:
AT BE CH DE ES FR GB IT LI NL SE

(56) Entgegenhaltungen:
EP-A- 0 134 919
DE-A- 1 909 998

(73) Patentinhaber: Ignaz Vogel GmbH & Co KG,
Fahrzeugsitze, Kleinsteinbacher Strasse 42-44,
D-7500 Karlsruhe 41-Stu(DE)

(72) Erfinder: Vogel, Ignaz, Dipl.-Ing., Kleinsteinbacher
Strasse 44, D-7500 Karlsruhe 41-Stu.(DE)

(74) Vertreter: Trappenberg, Hans, Postfach 1909,
D-7500 Karlsruhe 1(DE)

ACTORUM AG

## Beschreibung

Die Erfindung betrifft einen Klapptisch zur Verwendung an auf Untergestellen angebrachten Fahrgastsitzen, gebildet aus einer Tischplatte, die wegklappbar an einem verschwenkbaren Träger befestigt ist, der eine der Tiefe der Sitzfläche des Fahrgastsitzes entsprechende Länge aufweist und neben dieser Sitzfläche am Untergestell des Fahrgastsitzes angebracht ist (siehe EP-A 0 134 919).

Zum Einnehmen kleiner Speisen, zum Anfertigen von Notizen, zum Abstellen von Gegenständen etc. ist bei Fahrzeugen, insbesondere solchen, die dem Transport von Fahrgästen über längere Strecken dienen, die Möglichkeit vorgesehen, vor den auf den Fahrgastsitzen sitzenden Passagieren einen Klapptisch einzuschwenken. Im Normalfalle ist ein derartiger Klapptisch an der Rückenlehne des davor angeordneten Fahrgastsitzes angebracht und kann aus der Rückenlehne herausgeklappt werden. Der Nachteil dieser Anordnung ist zum einen, daß der Klapptisch verhältnismäßig weit von dem Passagier entfernt ist und auch, daß er den Bewegungen der Rückenlehne des davor angeordneten Fahrgastsitzes folgt. Um beiden Nachteilen zu begegnen, ist es bekannt geworden, den Klapptisch an einem separaten Träger anzuordnen, der am Gelenk der Rückenlehne des Fahrgastsitzes verschwenkbar gelagert ist und zusammen mit der wegklappbaren Tischplatte in Richtung auf den dahinter angeordneten Fahrgastsitz verschwenkt werden kann. Der Nachteil dieser, sehr häufig anzutreffenden Konstruktion ist, daß durch den im Beinraum angeordneten Träger die Beinfreiheit des Passagiers sehr stark beeinträchtigt wird.

Um dies zu vermeiden, sind auch Konstruktionen bekannt geworden, die die Tischplatte über eine Tragkonstruktion an der Armlehne derartiger Fahrgastsitze anordnen. Da die Armlehne jedoch in aller Regel deutlich niedriger als die gewünschte Tischhöhe ist, da sie in aller Regel auch nicht so weit vorkragt, wie dies zur Unterstützung der Tischplatte notwendig wäre, ist die zum Anbringen der Tischplatten an der Armlehne erforderliche Tragkonstruktion sehr aufwendig und schwierig zu bedienen.

Weiter bekannt ist ein Klapptisch, der verschwenkbar an einem ebenfalls verschwenkbaren Träger angebracht ist, der eine der Tiefe der Sitzfläche des Fahrgastsitzes entsprechende Länge aufweist und neben dieser Sitzfläche am Untergestell des Fahrgastsitzes angebracht ist. Nicht mehr also wie bisher wird ein derartiger Klapptisch an der Rückenlehne beziehungsweise der Rückseite des davor angeordneten Fahrgastsitzes angebracht, sondern am Fahrgastsitz selbst. Dadurch ist auf jeden Fall die Beinfreiheit zwischen den Sitzen gegeben, die Passagiere fühlen sich also durch derartige Tische nicht eingeengt. Durch Verschwenken des Trägers kann die Tischplatte in ihre Gebrauchslage geklappt und nach dem Gebrauch wieder in die Ruhelage neben den Sitzflächen des Fahrgastsitzes verbracht werden. (EP-A 0 134 919)

Allerdings ist festzustellen, daß üblicherweise die Tiefe der Sitzfläche aus Raumspargründen so gering bemessen ist, daß der Träger, der ja diese Sitzflächentiefe nicht überschreiten darf, zu kurz wird. Dadurch wäre es nicht möglich, den Klapptisch in die erforderliche Höhe vor dem Passagier zu verbringen.

Aufgabe der Erfindung ist es, einen derartigen Klapptisch anzugeben, der unschwer in die Gebrauchslage in normgerechter Höhe und entsprechendem Abstand vom Passagier einzuschwenken und ebenso einfach wieder in eine nicht störende Ruhelage neben dem Sitzkissen des Fahrgastsitzes zu verbringen ist. Erreicht wird dies in erfindungsgemäßer Weise dadurch, daß die Trägerlänge an die Tiefe der Sitzfläche des Fahrgastsitzes anpaßbar ist.

Dies kann dadurch erreicht werden, daß der Träger ein Teleskoprohr ist, in dessen inneren eine Gas-Feststellfeder angeordnet sein kann. Weiter kann der Träger auch aus zwei über ein Klappscharnier ineinanderklappbaren Trägerteilen gebildet sein, zwischen denen eine Druckfeder, vorzugsweise eine Gasfeder, angebracht sein kann. Eine sehr wirtschaftliche Möglichkeit zur Anpassung der Länge des Trägers an die Sitzflächentiefe ist nach der Erfindung dadurch gegeben, daß das Klappscharnier durch eine fußseitig vom Träger abstehende Stützstrebe, die zweckmäßigerweise in Elastomerbuchsen gelagert ist, überbrückt ist.

Auf der Zeichnung ist ein Ausführungsbeispiel des Erfindungsgegenstandes schematisch dargestellt, und zwar zeigen:

Fig. 1 in Seitenansicht und
Fig. 2 in Frontansicht einen in Gebrauchslage befindlichen Klapptisch für einen Doppelsitz und
Fig. 3 denselben Klapptisch in Ruhelage.

Am Rahmen (1) des Untergestells eines Doppel-Fahrgastsitzes ist eine Konsole (2) angebracht, die mit Lagerstellen (3 und 4) für einen Teilträger (5) und eine Stützstrebe (6) versehen ist. Die Lagerstelle (4) für die Stützstrebe (6) kragt hierbei über den Rahmen (1) des Untergestells vor, während sich die Lagerstelle (3) für den Teilträger (5) etwa in der Mitte dieses Rahmens (1) befindet. Über ein Klappscharnier (7) ist ein Trägerteil (8) angelenkt, an dem ein Unterstützungswinkel (9) angebracht ist. Der Unterstützungswinkel (9) weist Lagerböcke (10) für wegklappbare Tischplatten (11) auf. Die Stützstrebe (6) ist oberhalb des Klappscharniers (7) im Trägerteil (8) gelagert (12). Die Sitzfläche beziehungsweise das Sitzkissen (13) des Fahrgastsitzes ist strichpunktiert eingezeichnet.

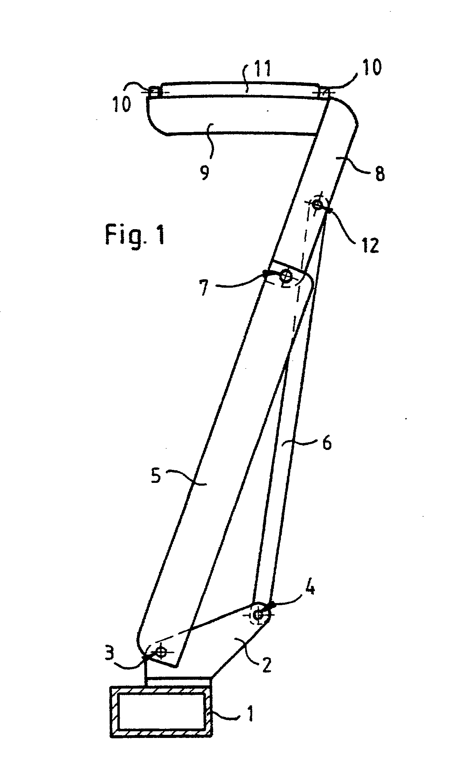

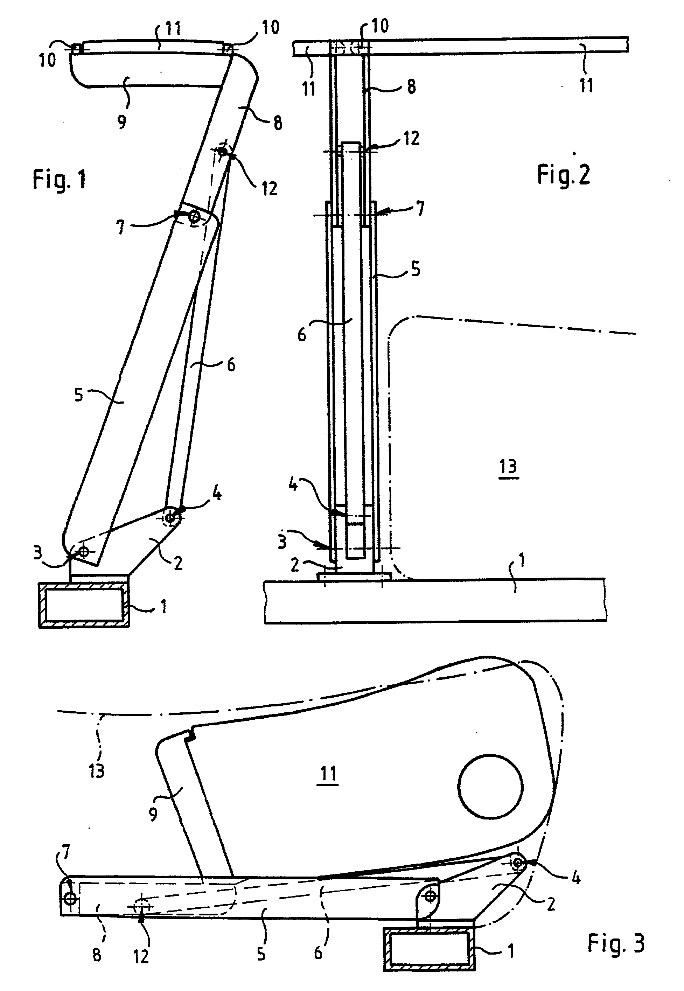

Die Gebrauchslage des Klapptisches ergibt sich aus den Fig. 1 und 2. Dadurch, daß sich der Schwerpunkt des Klapptisches (11) jenseits der Knicklage des Klappscharniers (7) befindet, ist diese Gebrauchslage stabil, das heißt, bei Druck auf die Tischplatte (11) wird der Träger, gebildet durch den Teilträger (5) und den Trägerteil (8), nicht zusammenklappe. Hierbei wird die Stützstrebe (6) auf Zug belastet. Um den Klapptisch in seine Fig. 3 gezeigte Ruhelage zu verbringen, muß lediglich nach Hochschwenken der Tischplatte (11), der Trägerteil (8) um die Lagerstelle (12) nach vorne verschwenkt werden, wodurch sich dieses Trägerteil (8) in den Teilträger (5) hinein verschwenken und sich der Träger (5, 8) insgesamt um die Lagerstelle (3) in die in Fig. 3 gezeigte Ruhelage bringen läßt. Als besonderer Vorteil ist hierbei festzustellen, daß dadurch, daß die Lagerstelle (12) der Stützstrebe (6) sich in Ruhelage unterhalb der Verbindungslinie zwischen der Lagerstelle (7) und der Lagerstelle (4) befindet, ein Verrasten der Gesamtkonstruktion in dieser Lage erfolgt. Möglich ist dies dadurch, daß die Stützstrebe (6) an den Lagerstellen (4) und (12) in Elastomerbuchsen gelagert ist.

**Patentansprüche**

1. Klapptisch zur Verwendung an auf Untergestellen (1) angebrachten Fahrgastsitzen, gebildet aus einer Tischplatte (11), die wegklappbar an einem verschwenkbaren Träger (5, 8) befestigt ist, der eine der Tiefe der Sitzfläche (13) des Fahrgastsitzes entsprechende Länge aufweist und neben dieser Sitzfläche (13) am Untergestell (1) des Fahrgastsitzes angebracht ist, dadurch gekennzeichnet, daß die Trägerlänge an die Tiefe der Sitzfläche (13) des Fahrgastsitzes anpaßbar ist.

2. Klapptisch nach Anspruch 1, dadurch gekennzeichnet, daß der Träger ein Teleskoprohr ist.

3. Klapptisch nach Anspruch 2, dadurch gekennzeichnet, daß im Inneren des Teleskoprohres eine Gas-Feststellfeder angeordnet ist.

4. Klapptisch nach Anspruch 1, dadurch gekennzeichnet, daß der Träger aus zwei über ein Klappscharnier (7) ineinander klappbaren Trägerteilen (5, 8) gebildet ist.

5. Klapptisch nach Anspruch 4, dadurch gekennzeichnet, daß zwischen den beiden Trägerteilen (5, 8) verschwenkbar eine Druckfeder, vorzugsweise eine Gasfeder, angebracht ist.

6. Klapptisch nach Anspruch 4, dadurch gekennzeichnet, daß das Klappscharnier (7) durch eine fußseitig vom Teilträger (5) abstehende Stützstrebe (6) überbrückt ist.

7. Klapptisch nach Anspruch 6, dadurch gekennzeichnet, daß die Stützstrebe (6) in Elastomerbuchsen gelagert ist.

**Claims**

1. A folding table for use on passenger seats which are mounted on supporting frames (1), formed from a table plate (11) which is fixed to a pivotable carrier (5, 8) in such a way that it can be folded away, the carrier being of a length which corresponds to the depth of the seat surface (13) of the passenger seat and being mounted beside said seat surface (13) on the supporting frame (1) of the passenger seat, characterised in that the length of the carrier can be adapted to the depth of the seat surface (13) of the passenger seat.

2. A folding table according to claim 1 characterised in that the carrier is a telescopic tube.

3. A folding table according to claim 2 characterised in that a gas locking spring is disposed in the interior of the telescopic tube.

4. A folding table according to claim 3 characterised in that the carrier is formed from two carrier portions (5, 8) which can be folded one into the other way of a folding hinge (7).

5. A folding table according to claim 4 characterised in that a compression spring, preferably a gas spring, is pivotably disposed between the two carrier portions (5, 8)

6. A folding table according to claim 4 characterised in that the folding hinge (7) is bridged across by a support strut (6) which projects from the carrier portion (5) at the bottom end.

7. A folding table according to claim 6 characterised in that the support strut (6) is mounted in elastomer bushes.

**Revendications**

1. Table repliable destinée à être utilisée pour des sièges de passager montés sur des châssis (1), et constituée par une tablette (11) fixée de manière rabattable sur un support articulé (5, 8) qui présente une longueur correspondant à la profondeur de l'assise (13) du siège de passager et qui est monté sur le châssis (1) du siège de passager à côté de cette assise (13), caractérisée par le fait que la longueur du support peut être adaptée à la profonduer de l'assise (13) du siège de passager.

2. Table repliable selon la revendication 1, caractérisée par le fait que le support est un tube télescopique.

3. Table repliable selon la revendication 2, caractérisée par le fait qu'un ressort pneumatique de blocage est disposé à l'intérieur du tube télescopique.

4. Table repliable selon la revendication 1, caractérisée par le fait que le support est constitué par deux parties de support (5, 8) qui peuvent être repliées l'une dans l'autre par l'intermédiaire d'une charnière de rabattement (7).

5. Table repliable selon la revendication 4, caractérisée par le fait qu'un ressort de compression, de préférence un ressort pneumatique, est monté de manière pivotante entre les deux parties de support (5, 8).

6. Table repliable selon la revendication 4, caractérisée par le fait que la charnière de rabattement (7) est surplombée par une jambe d'appui (6) qui s'écarte du support partiel (5) du côté des pieds.

7. Table repliable selon la revendication 6, caractérisée par le fait que la jambe d'appui (6) est montée tournante dans des douilles en élastomère.

Fig. 1

Fig. 1

Fig. 2

Fig. 3